# EUROPEAN PATENT APPLICATION

(11) **EP 3 831 458 A1**
(43) Date of publication of application: **09.06.2021**
(21) Application number: 20209380.3
(22) Date of filing: 24.11.2020
(51) Int. Cl.: B01D 29/03, B01D 29/33, B01D 29/68, B01D 35/06, B03C 1/30

(54) **IMPROVED WATER FILTER**

(30) Priority: 02.12.2019 IT 201900022722
(71) Applicant: Ci.Fa. S.r.l., 60022 Castelfidardo (AN) (IT)
(72) Inventor: MOSCIONI, BRUNO, 62018 POTENZA PICENA (MC) (IT)
(74) Representative: Cutropia, Gianluigi

(57) **Abstract**

A filter (100) for retaining the ferrous residues and the impurities contained in a heat-transfer fluid of a heating system; the filter (100) comprises a cylindrical body (1) with a bottom wall (12), a lateral wall (10) and a cover (16) with a cover plate (11) in such a way to define a filtering chamber (Q); the filter (100) also comprises a first mouth (21) and a second mouth (22) provided in the lateral wall (10) and a third mouth (23) provided in the bottom wall (12); a cartridge (8) shaped like an open cylinder is disposed in the filtering chamber (Q) and comprises a radial opening (A) facing the second mouth (22); and a magnet (5) is removably disposed inside a tang (52) that protrudes from the cover plate (11) in axial direction inside the filtering chamber (Q).

## Description

The present patent application for industrial invention relates to a magnetic sludge filter for heating systems.

In particular, the present patent application relates to a filter suitable for being installed upstream a heating system (a boiler or a hydronic heater) in such a way to filter iron oxides and suspended particles in order to improve the quality of the heat transfer fluid that circulates in the systems. As a matter of fact, the heat transfer fluid that circulates in a heating system must be free of metallic oxides (especially iron oxides) and impurities that may damage the parts of the system, such as electronic circulators, exchangers, thermostatic valves and heat counters.

Such a type of filter has a twofold function:
- to retain the metallic residues from the heating system;
- not to reduce the flow rate (and consequently the thermal performance) of the system; in fact, in case of a similar reduction, the automatic stop system provided in the boiler and in the heat pump will be activated, requiring the intervention of a qualified technician and preventing the heating system from operating correctly.

Cylindrical filters are known, which are suitable for being disposed in vertical or horizontal direction with a cartridge (screen) with closed cylindrical shape. These filters are subject to clogging, with a progressive reduction of the flow rate and the thermal performance of the heating system, ultimately blocking the circulation of the heat transfer fluid and interrupting the heating service. Therefore, the volume of the filtering chamber for the collection of oxides and sludge determines the frequency of the cleaning operations. Moreover, the functionality of the system is restored by cleaning the filter, removing the metal oxides retained by the filter. In order to clean the filter, it is necessary to open the filter, extract the cartridge and wash the cartridge by hand under running water. The clogging of the filter cannot be foreseen in advance. Therefore, in order to guarantee the efficiency of the heating system, the cleaning of the filter must be easy in order to be performed by the user.

The main problem for the user consists in the fact that the sludge filter must be opened, cleaned, closed and re-installed in the system because the filter is installed in line with the water heating system. Therefore, because of the lack of professional expertise, the user may open and close the filter in an incorrect way, causing water leaks that may damage the heating system and make its use impossible.

US3256995 discloses a water filter, for example for river and lake water, suitable for filtering coarse impurities, such as leaves and the like. Such a filter comprises a screen with C-shaped cross-section and a center shaft driven into rotation by a gear reducer. The center shaft supports a scraper that scrapes the filtering screen in order to remove the impurities. Obviously, such a filter must have a large size because of the provision of the gear motor and cannot be installed in a heating system. Moreover, such a filter cannot house a magnet in axial direction because the central position of the filter is occupied by the rotary shaft and therefore it is not suitable for retaining the iron residues of a heating system. Furthermore, such a document is not related with the technical problem of not reducing the flow rate of a heating system.

US4867879 discloses a device for mechanically purifying the heat transfer fluid of a heating system, comprising a rotation-symmetrical sieve chamber forming a section of the pipeline and having an inlet stub with a central axis.

WO2018/138061, in the name of the applicant, discloses a magnetic filter suitable for filtering metal residues. However, such a filter has a cylindrical cartridge that surrounds an axial conduit of the filter wherein a magnet is disposed.

EP3434984, DE3159313, WO2018207083 and WO2019159039 disclose traditional magnetic filters provided with a cylindrical cartridge (screen) that defines a first axial chamber surrounded by a second annular chamber. The magnet is disposed in axial direction in the first axial chamber. The fluid is introduced in the first chamber in axial direction and is discharged in radial direction from the cartridge into the second chamber.

These types of filters are severely impaired by problems related with a considerable loss in the flow rate when deposits are accumulated in the annular filtering cartridge (axial chamber); moreover, the clogging considerably reduces the flow of heat transfer fluid in the second annular chamber. The applicant has discovered that, with these types of filters, the heating system is often blocked because of a reduction in the flow rate. Furthermore, these types of filters do not have a second discharge mouth in communication with the first axial chamber for the removal of deposits when the filter is closed.

The purpose of the present invention is to overcome the drawbacks of the prior art by disclosing a filter that is inexpensive and at the same time capable of retaining a higher quantity of sludge and iron residues in order to reduce the frequency of the cleaning operations, minimize the risk of clogging compared to a filter of the prior art, without reducing the flow rate of the heating system, and avoiding to block the heating system.

An additional purpose of the present invention is to disclose a filter wherein the removal of the iron residues, the washing of the cartridge and the ejection of the filtered residues can be performed easily, without the need to open the filter and extract the cartridge.

A further purpose of the present invention is to disclose a versatile filter that can be installed in vertical or horizontal direction without impairing its filtering performance, increasing the volume of the filtering chamber, with the possibility of washing the cartridge and ejecting the sludge when the filter is closed.

These purposes are achieved according to the invention with the characteristics of the appended independent claim 1.

Advantageous embodiments appear from the dependent claims.

The filter according to the invention is defined by claim 1.

For the sake of clarity, the description of the filter according to the invention continues with reference to the attached drawings, which have a merely illustrative, not limiting value, wherein:
Fig. 1 is a longitudinal sectional view of the filter according to the invention;
Fig. 2 is a cross-sectional view of the filter according to the invention, along a plane passing through a first mouth and a second mouth;
Fig. 3 is an axonometric view of the cartridge of the filter according to the invention;
Fig. 4 is an axial sectional view of the filter according to the invention in vertical position, which shows a flow of the heat transfer fluid during a filtering and magnetic sludge separation process;
Fig. 5 is an axial sectional view of the filter according to the invention in horizontal position, which shows a flow of the heat transfer fluid during a filtering and magnetic sludge separation process;
Fig. 6 is an axial sectional view of the filter according to the invention in vertical position, which shows a flow of the heat transfer fluid during a washing process;
Fig. 7 is an axial sectional view of the filter according to the invention in horizontal position, which shows a flow of the heat transfer fluid during a washing process.
Fig. 8 is an axial sectional view of a filter according to a second embodiment of the invention in vertical position, which shows a flow of the heat transfer fluid during a washing and magnetic sludge separation process; and
Fig. 9 is an axial sectional view of a variant of the filter according to the invention.

With reference to the Figures, a filter according to the invention is generally indicated with reference numeral 100.

The filter (100) has been devised to be installed between a water system (water mains) and a domestic appliance (a boiler or a hydronic heater), in such a way to prevent the circulation of residues and impurities inside the appliance.

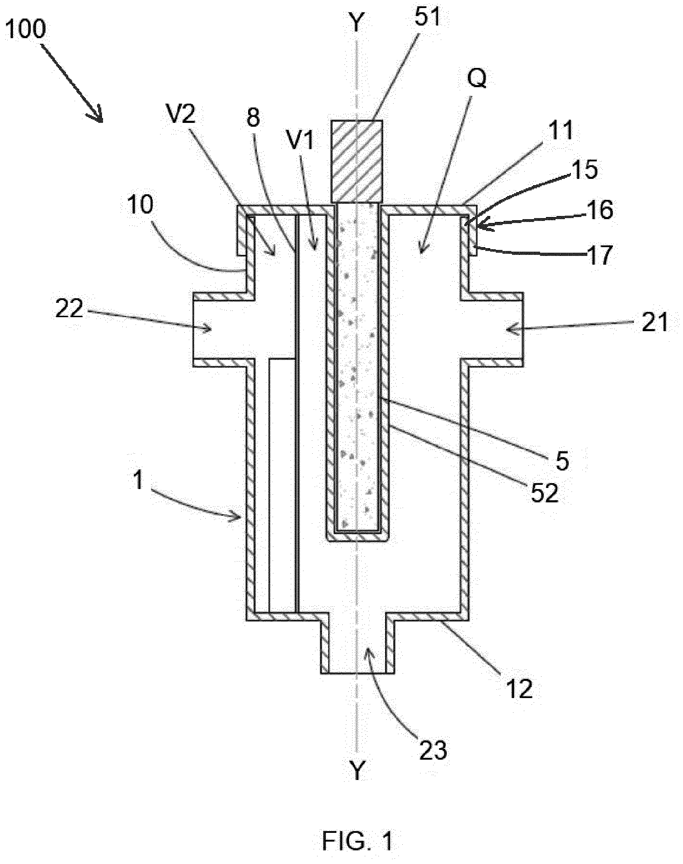

With reference to Fig. 1, the filter (100) comprises a cylindrical body (1) with a longitudinal axis (Y). The body (1) comprises a bottom wall (12) and a lateral wall (10).

The body (1) is hollow and comprises a filtering chamber (Q) defined by the lateral wall (10) and by the bottom wall (12). The filtering chamber (Q) has a circular cross-section.

The filter (100) comprises a first mouth (21), a second mouth (22) and a third mouth (23).

The first mouth (21) and the second mouth (22) are cylindrical conduits that extend outwards from the lateral wall (10) of the cylindrical body, in opposite directions.

The first mouth (21) and the second mouth (22) have a cylindrical wall with radial axis to the longitudinal axis (Y).

The third mouth (23) is a cylindrical conduit that protrudes axially outwards from the bottom wall (12).

The lateral wall (10) of the body has an edge (15) opposite to the bottom wall (12).

A cover (16) is fixed on the edge (15) of the body in such a way to close the filtering chamber (Q). Although in the appended figures the cover (16) is separated from the body, the cover (16) can be integrally made in one piece with the body (1).

The cover (16) comprises a cover plate (11) with a collar (17) disposed around the edge (15) of the lateral wall of the body.

The cover (16) can be coupled with the lateral wall (10) of the body in a removable way, for instance by means of screwing, fit-in coupling, pressure coupling or the like.

A tang (52) protrudes from the cover plate (11) and is axially disposed inside the filtering chamber (Q). The tang (52) is internally empty and open outwards in such a way to define a housing for a magnet (5). For illustrative purposes, the tang (52) and the magnet (5) can have a cylindrical shape.

In order to maximize the filtering performance, the magnet (5) is disposed in axial position in the filtering chamber (Q), in such a way that the field of action of the magnet (5) can affect the entire section and length of the filtering chamber.

A handle (51) is connected to an end of the magnet (5) and protrudes externally from the cover plate (11) in such a way to be manually grabbed by an operator in order to extract the magnet (5) from the housing inside the tang (52).

The tang (52) is made of non-ferromagnetic material, in such a way not to be magnetized by the magnet (5).

The filter (100) comprises a cartridge (8) (filtering screen) disposed inside the filtering chamber (Q). The cartridge (8) is suitable for retaining the residues and the impurities contained in the heat transfer fluid that circulates through the filtering chamber (Q).

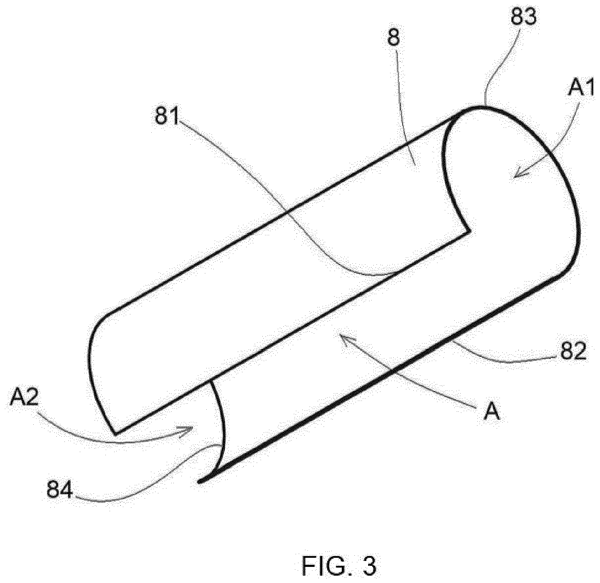

With reference to Fig. 3, the cartridge (8) is shaped like an open cylinder and has a C-shaped cross-section. The cartridge (8) consists in an open cylindrical manifold that comprises a mesh with a plurality of holes. In such a way, when it is crossed by the heat transfer fluid, the cartridge (8) retains the residues and the impurities bigger than the diameter of the holes.

The length of the cartridge (8) is equal to the length of the filtering chamber (Q). The cartridge (8) divides the filtering chamber (Q) into two separate compartments:
- a first compartment (V1) in communication with the first mouth (21) and the third mouth (23), and
- a second compartment (V2) in communication with the second mouth (22).

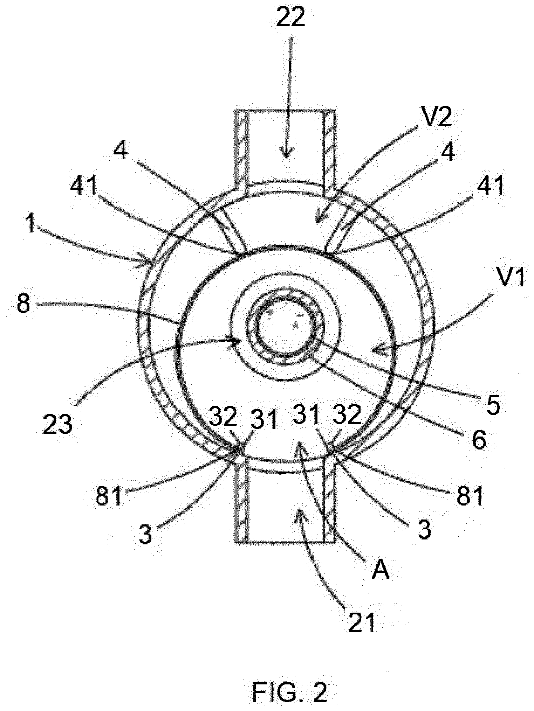

With reference to Fig. 2, the axis of the cartridge (8) is spaced out from the longitudinal axis (Y) of the body (1) and therefore the cartridge is not centered inside the filtering chamber (Q).

The cartridge (8) comprises a longitudinal opening (A) that extends longitudinally along the entire length of the cartridge and two lateral edges (81, 82) that define said longitudinal opening (A).

With reference to Fig. 2, the cartridge (8) is disposed inside the filtering chamber (Q) in such a way that the longitudinal opening (A) is disposed in correspondence of the first mouth (21). The cartridge (8) is disposed in such a way that the two lateral edges (81, 82) are in contact with the lateral wall (10) of the body and define a portion of the lateral wall (10) disposed between said two lateral edges (81, 82) of the cartridge, where the first mouth (21) ends.

The second compartment (V2) does not have an annular shape that surrounds the first compartment, it being shaped like a half moon in cross-section. In view of the above, the volume of the first compartment (V1) can be maximized with respect to the volume of the second compartment (V2). For illustrative purposes, the volume of the first compartment (V1) can be higher than twice the volume of the second compartment (V2).

Such a maximization of the first compartment is not possible in the filters with cylindrical cartridge according to the prior art, because it would require a reduced annular thickness of the second compartment that would impair the operation of the filter, reducing the passage section of the fluid.

The fluid from the first mouth (21) enters the longitudinal opening (A), reaches the first compartment (V1) and passes through the cartridge (8), being directed towards the second compartment (V2), without creating any cavitation around the cartridge (8). The fact that there is no axial incoming flow in the first compartment, and the presence of a radial incoming flow in the first compartment minimizes the loss of the flow rate because there is no transformation of the axial incoming flow in the first compartment into a radial outgoing flow of the first compartment. In such a way, although the first compartment is filled with residues, there is not loss of the flow rate that would block the heating system.

With reference to Fig. 3, the cartridge (8) comprises a first axial opening (A1) defined by a first ending edge (83), and a second axial opening (A2) defined by a second axial edge (84). The first ending edge (83) is in contact with the cover plate (11) of the cover, whereas the second ending edge is in contact with the bottom wall (12) of the body (1).

The third mouth (23) provided in said bottom wall (12) ends in said second axial opening (A2) of the cartridge.

The cartridge (8) is not centered inside the filtering chamber (Q), in such a way to define the first compartment (V1) with a circular segment section, and the second compartment (V2) with a half-moon section.

With reference to Fig. 2, the lateral wall (10) of the body comprises two ribs (3) against which the two lateral edges (81, 82) of the cartridge (8) are engaged. Each rib (3) is obtained in lateral position relative to said first mouth (21) and extends longitudinally for the entire length of the lateral wall (10) of the body. Each rib (3) comprises an internal edge (31) facing the other rib (3), and an external edge (32) opposite to said internal edge (31). The two lateral edges (81, 82) of the cartridge (8) are engaged against the external edges (32) of the two ribs (3), thus preventing the rotation of the cartridge (8) that would cause a displacement of the opening (A) and consequently an occlusion of the first mouth (21) by the cartridge (8).

The lateral wall (10) and/or the bottom wall (12) and/or the cover plate (13) of the body comprise at least one projection (4) suitably configured to keep said at least one lateral edge (81, 82) of the cartridge (8) in contact with the lateral wall (10) and block the cartridge (8) inside the filtering chamber (Q).

With reference to Figs. 1 and 2, the lateral wall (10) comprises two projections (4) that are provided in the proximity of the second mouth (22) and extend longitudinally along a portion of the lateral wall (10) disposed between the second mouth (22) and the bottom wall (12).

The two projections (4) comprise an end (41) that is engaged against the cartridge (8). In such a way, the two projections (4) keep the cartridge (8) in distant position relative to the second mouth (22) and push the cartridge (8) towards the first mouth (21), thus cooperating with the two ribs (3) in order to keep the cartridge (8) in a stable position in the filtering chamber (Q).

According to an alternative embodiment of the invention (not shown in the appended Figures), the cover plate (11) and\or the bottom wall (12) may comprise internal projections with trajectories that coincide with the trajectories of portions of the ending edges (83, 84) of the cartridge (8).

Preferably, the cover plate (11) is integral with the cover (16) that can be extracted to provide free access to the filtering chamber (Q). The cover (16) is hermetically closed and comprises coupling means suitable for being coupled with coupling means disposed in one end of the lateral wall (10) of the body (1).

According to an alternative embodiment of the invention, which is not shown in the appended figures, the filter (100) may comprise a fourth mouth provided in said cover plate (11) in peripheral position relative to the tang (52).

The body (1) may have different dimensions according to the place where said filter (100) is to be installed. If the filter (100) is installed upstream an industrial machine, the body will be considerably bigger than the body of a filter (100) suitable for being installed upstream a domestic appliance. When the section of the body (1) increases, also the section of the first compartment (V1) and of the second compartment (V2) will increase.

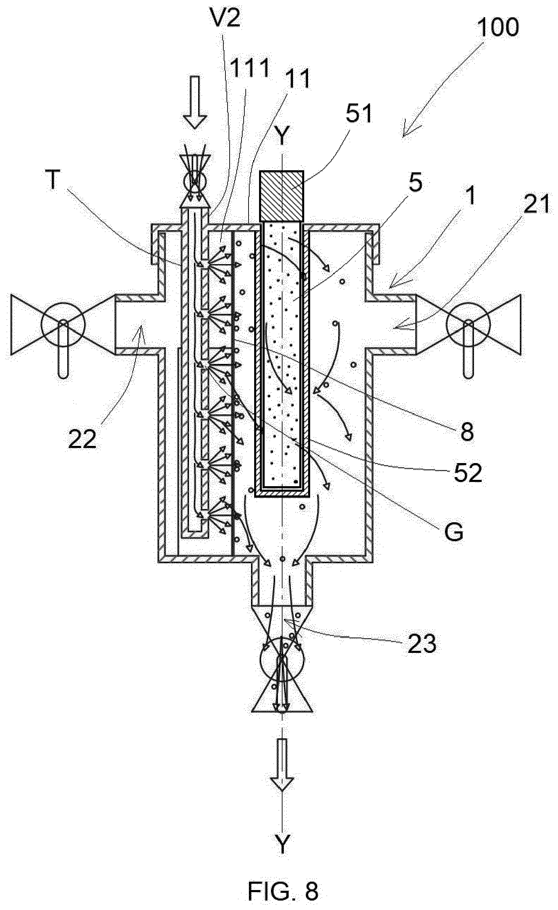

With reference to Fig. 8, if the second compartment (V2) is big, the filter (100) advantageously comprises a pipe (T) disposed in the second compartment (V2) in parallel position to the longitudinal axis (Y) of the body (1).

The pipe (T) comprises a set of longitudinal holes where nozzles (G) are disposed, facing the cartridge (8). The pipe (T) is connected to the cover plate (11). The cover plate (11) comprises a mouth (111) disposed in peripheral position, where said pipe (T) ends.

The filter (100) of the invention uses its entire length to filter the heat transfer fluid. More precisely, because of the provision of the opening (A) of the cartridge, the filter of the invention does not need any tubes, springs or channels that occupy space inside the filtering chamber and limit the size of the cartridge.

The length of the cartridge (8) installed inside the filter (100) is the same as the length of the filter, whereas in the filters of the prior art the length of the cartridge is lower than the length of the filter. In such a way, by using the entire length of the filter (100), the filtering capacity of the filter (100) is increased.

Moreover, the filter (100) is less expensive than a filter according to the prior art. In fact, given that the cartridge (8) is open and not closed, the production costs caused by a perfect calendering of the cartridge and by the welding of the two edges are avoided. Moreover, the filter (100) does not need any tubes or springs, thus eliminating the production and maintenance costs of said parts.

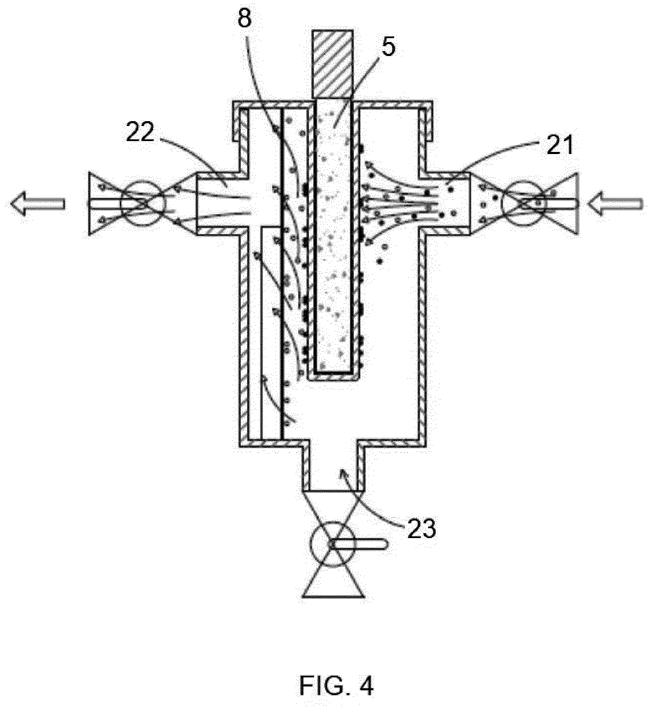

Furthermore, the filter (100) is extremely versatile and can be installed in horizontal position and in vertical position, as shown in Figs. 4 to 7.

When the filter (100) is disposed in vertical position, the first mouth (21) acts as inlet mouth, the second mouth (22) acts as outlet mouth, and the third mouth (23) acts as discharge mouth. During filtering, the heat transfer fluid enters the filtering chamber (Q) through the first mouth (21) and exits from the filtering chamber (Q) through the second mouth (22).

During filtering, the third mouth (23) is closed by a valve in such a way to prevent the passage of the heat transfer fluid.

Instead, if the filter (100) is installed in horizontal position, then the third mouth (23) acts as inlet mouth, the second mouth (22) acts as outlet mouth, and the first mouth (21) acts as discharge mouth. During filtering, the heat transfer fluid enters the filtering chamber (Q) through the third mouth (23) and exits from the filtering chamber (Q) through the second mouth (22).

In both cases, during filtering, the heat transfer fluid passes through the cartridge (8) in the direction from the first compartment (V1) to the second compartment (V2), and so, in both cases, the first compartment (V1) acts as collector for the sludge, the impurities and the residues contained in the heat transfer fluid.

Inside the first compartment (V1) the tang (52) with the magnet (5) generates a magnetic field that attracts the ferrous particles contained in the heat transfer fluid, making them adhere to the external walls of the tang (52) and blocking them.

The sludge, the impurities and the residues trapped and collected in the first compartment (V1) can be removed with a simple washing process.

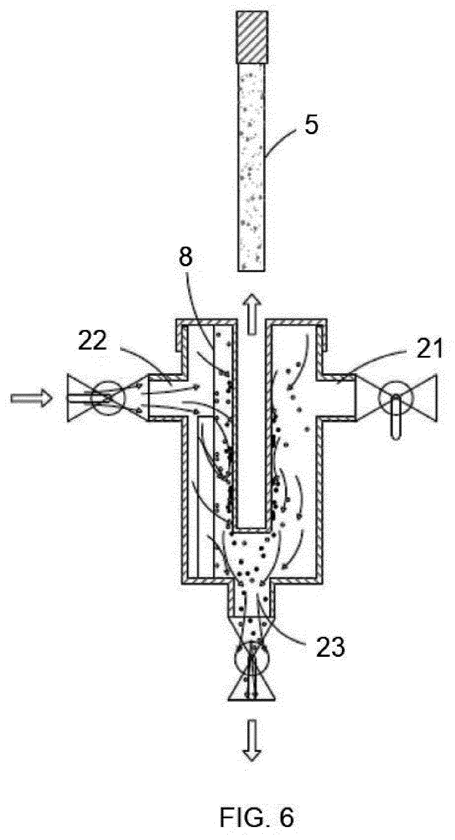

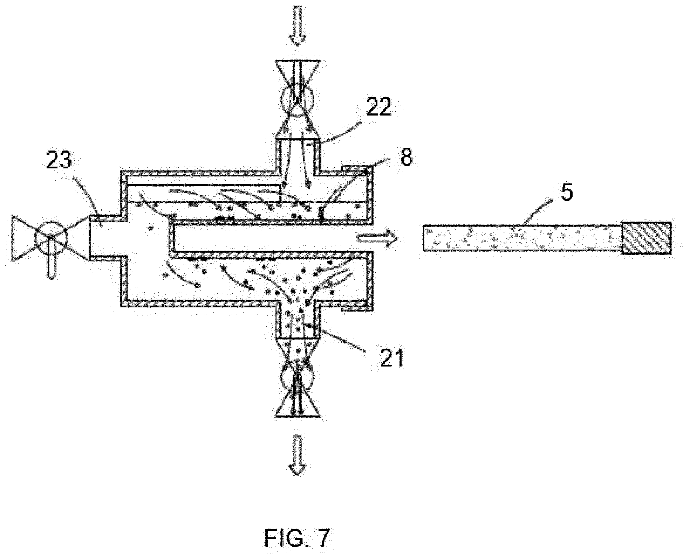

With reference to Figs. 6 and 7, the washing process provides for:
- closing the mouth (21 or 23) by closing a valve disposed upstream the mouth (21 or 23); if the filter (100) is in vertical position, the inlet mouth coincides with the first mouth (21); on the contrary, if the filter (100) is in horizontal position, the inlet mouth coincides with the third mouth (23);
- extracting the magnet (5) from the tang (52), making the particles retained on the tang (52) by magnetic attraction fall on the bottom of the filter (100);
- opening the discharge mouth (23 or 21) by opening a valve disposed downstream the discharge mouth; if the filter (100) is in vertical position, the discharge mouth coincides with the third mouth (23); on the contrary, if the filter (100) is in horizontal position, the discharge mouth coincides with the first mouth (21); and
- ejecting the sludge, the impurities and the residues contained in the first compartment (V1) through the discharge mouth.

The impurities are automatically ejected as soon as the inlet mouth is closed and the discharge mouth is opened; at the same time, as soon as the discharge mouth is opened, the fluid contained in a pipe connected downstream the second mouth (22) is sucked inside the filter (100) by depression, thus contributing to the cleaning of the cartridge (8) and of the tang (52), being finally discharged through the discharge mouth.

According to the embodiment of Fig. 8, the nozzles (G) disposed along said pipe (T) are used to perform a pressurized washing of the cartridge (8) and of the tang (52) using a small quantity of water from the mains, in such a way to perfectly clean the cartridge (8) and the tang (52) from sludge and residues, in such a way that it is not necessary to perform any extraordinary maintenance or cleaning operations that would consist in opening the filter (100), extracting the cartridge (8) and the tang (52) from the filter (100) and washing the cartridge (8) and the tang (52) by hand under running water.

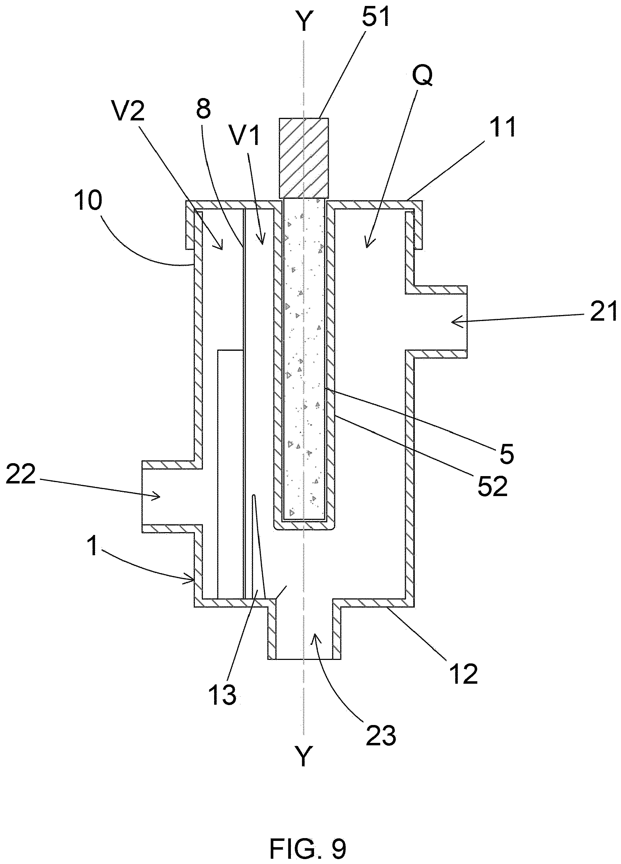

Fig. 9 illustrates a variant wherein the axis of the first mouth (21) does not correspond with the axis of the second mouth (22). The axis of the second mouth (22) is closer to the third mouth (23) with respect to the axis of the first mouth (21).

When the first mouth (21) is the water inlet, and the second mouth (22) is the water outlet, the entire water flow must pass through the magnet (5) in longitudinal direction and the third mouth (23) will discharge the sludge.

A deflector (13) protrudes from the bottom wall (12) in the first compartment (V1), near to the cartridge (8), until it reaches the axis of the second mouth (22).

If the fluid enters from the third mouth (23), the deflector (13) disposed in the front of the second mouth (22) conveys the fluid flow along the magnet (5) and the first mouth (21) will discharge the sludge.

Because of such a configuration of the first mouth (21) and of the second mouth (22), in case of operation in vertical direction (Fig. 4), the fluid flow that passes through the filter is forced to travel along the entire length of the magnet (5) and of the filtering cartridge (8), thus maximizing the cleaning effects.

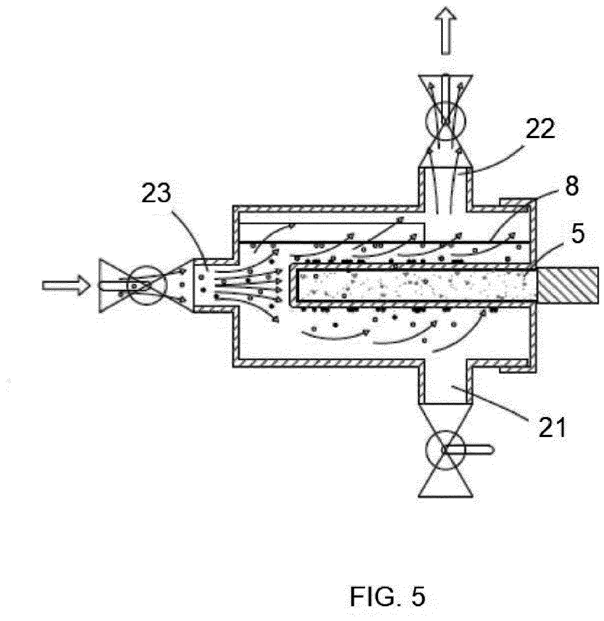

In case of operation in horizontal direction (Fig. 5), the fluid flow is distributed along the entire length of the magnet (5) and of the filtering cartridge (8) because of the provision of the deflector (13) that conveys the incoming flow from the third mouth (23), disposed on the bottom, towards the opposite side of the filter, distributing the fluid flow along the entire length of the magnet (5) and of the cartridge (8).

## Claims

1. Filter (100) for retaining the ferrous residues and the impurities contained in the heat transfer fluid of a heating system; said filter (100) comprising:
- a cylindrical body (1) with a longitudinal axis (Y), a bottom wall (12) and a lateral wall (10); said body (1) being hollow and comprising a filtering chamber (Q);
- a cover (16) with a cover plate (11) connected to an edge (15) of the lateral wall of the body opposed to the bottom wall;
- a first mouth (21) and a second mouth (22) obtained on said lateral wall (10) of the body, in opposite directions;
- a third mouth (23) obtained on said bottom wall (12) of the body;
- a magnet (5) removably arranged inside a tang (52) that protrudes from said cover plate axially inside said filtering chamber (Q).
- a cartridge (8) disposed in said filtering chamber (Q); said cartridge (8) being suitable to retain residues and impurities of the fluid that passes through said filtering chamber (Q); said cartridge (8) dividing said filtering chamber (Q) into a first compartment (V1) in communication with said first mouth (21) and said third mouth (23), and a second compartment (V2) in communication with said second mouth (22);
wherein said cartridge (8) has a "C"-shaped cross-section, consisting in an open cylinder having a longitudinal opening (A) that extends for the entire length of the cartridge, and
said first mouth (21) is suitably disposed to end in said longitudinal opening (A) of the cartridge (8) in such a way that the flow of the heat-transfer fluid from the first mouth (21) radially enters said first compartment (V1),
said second compartment (V2) has a half-moon shaped cross-section and does not surround said first compartment (V1) in an annular way.

2. The filter (100) of claim 1, wherein said magnet (5) comprises a handle (51) that protrudes outwards from said cover plate (11) of the cover.

3. The filter (100) of claim 1 or 2, wherein said tang (52) of the cover is made of a non-ferromagnetic material.

4. The filter (100) of anyone of the preceding claims, wherein said cover (16) is removably coupled with said lateral wall (10) of the body.

5. The filter (100) of anyone of the preceding claims, wherein said cartridge (8) comprises two lateral edges (81, 82) that define said radial opening (A); said two lateral edges (81, 82) being in contact with said lateral wall (10) of the body (1) and defining a portion of the lateral wall (10) disposed between said two lateral edges (81, 82) where said first mouth (21) is obtained.

6. The filter (100) of any one of the preceding claims, wherein said cartridge (8) comprises a first axial opening (A1) defined by a first ending edge (83), and a second axial opening (A2) defined by a second ending edge (84); said first ending edge (83) being in contact with said cover plate (11) of the body; said second ending edge (84) of the cartridge (8) being in contact with said bottom wall (12) of the body.

7. The filter (100) of claim 5 or 6, wherein said lateral wall (10) of the body comprises at least one rib (3) that acts as stop for said at least one lateral edge (81, 82) that defines said radial opening of the cartridge (8).

8. The filter (100) of anyone of the preceding claims, wherein said first mouth (21) and said second mouth (22) consist in cylindrical conduits that protrude externally protruding in opposite directions from said lateral wall (10) of body.

9. The filter (100) of anyone of the claims 5 to 8, wherein said lateral wall (10) of the body and/or said bottom wall (12) and/or said cover plate (11) comprise at least one projection (4) that keeps said at least one lateral edge (81, 82) of the cartridge (8) in contact with the lateral wall (10).

10. The filter (100) of anyone of the preceding claims, comprising a pipe (T) disposed in said second compartment (V2); said pipe (T) comprising at least one nozzle (G) facing said cartridge (8).

11. The filter (100) of claim 10, wherein said cover plate (11) comprises a mouth (111) disposed in peripheral position, wherein said pipe (T) ends.

12. The filter (100) of anyone of the preceding claims, wherein the volume of the first compartment (V1) is at least twice the volume of the second compartment (V2).

13. The filter (100) of any one of the preceding claims, wherein the axis of the first mouth (21) does not correspond with the axis of the second mouth (22) and the axis of the second mouth (22) is closer to the third mouth (23) with respect to the axis of the first mouth (21).

14. The filter (100) of claim 10, also comprising a deflector (13) that protrudes from the bottom wall (12) in the first compartment (V1), near to the cartridge (8), until it reaches the axis of the second mouth (22).
